# EUROPEAN PATENT APPLICATION

(11) **EP 1 712 426 A1**
(43) Date of publication of application: **18.10.2006**
(21) Application number: 06252100.0
(22) Date of filing: 18.04.2006
(51) Int. Cl.: B60R 21/0136

(54) **Flip-up type hood and hood flip-up method for a vehicle**

(30) Priority: 14.04.2005 JP 2005117292
(71) Applicant: NISSAN MOTOR CO., LTD., Yokohama-shi, Kanagawa 221-0023 (JP)
(72) Inventor: Yoshitake, Toshihiro c/o NIssan Motor Co., Ltd, Yokohama-shi Kanagawa 221-0023 (JP)
(74) Representative: Holmes, Matthew William

(57) **Abstract**

A vehicle that can mitigate the occurrence of the up and down vibration of the flipped-up hood is provided. Actuators 20 fixed on vehicle body 3 of the front portion of the vehicle flip up the rear end of hood 2 when a collision is detected by a bumper sensor 13 between the front end of the vehicle and an obstacle. After the flip-up operation of hood 2 is performed by actuators 20, energy-absorbing bodies 23 absorb the kinetic energy of hood 2.

## Description

The present invention relates to a flip-up type hood and hood flip-up method for a vehicle and particularly, but not exclusively, to a vehicle having a flip-up type hood that is flipped up when the vehicle crashes into the obstacle and to a method of flipping up a hood.

The function of this type of flip-up type hood structure is to flip up the rear end of the hood when a traveling vehicle crashes into an obstacle, thus ensuring clearance between the structures inside of the engine room and the hood and mitigating the reactive force to the obstacle when it crashes into the top of the hood causing a secondary collision. (For example, see Unexamined Japanese Patent Application Publication No. H11-348716)

An example of this type of flip-up type hood structure is one in which both ends of the rear end of the hood are connected to the vehicle body in the horizontal direction of the vehicle by means of actuators and these actuators push up the rear end of the hood, causing it to flip up.

For this type of structure, when the actuators finish the push-up operation, the hood, which is connected to the actuators, stops suddenly. When the hood stops suddenly, up and down vibration occurs at the center portion of the rear end of the hood in the horizontal direction of the vehicle due to inertial force.

It is an aim of the invention to address this issue. Other aims and advantages of the invention will become apparent from the following description, claims and drawings.

According to one aspect of the invention, therefore, there is provided a vehicle and a method as set out in the appending claims.

According to another aspect of the invention, there is provided a vehicle having a flip-up type hood structure, comprising a hood installed on a front portion of a vehicle body so that its rear end can flip up, at least one actuator fixed to the body of the vehicle that flips up the rear end of the hood, a sensor that detects a collision between the front portion of the vehicle and an obstacle, a controller connected to activate the actuator when a collision between the front end of the vehicle and an obstacle is detected and an energy-absorbing body to absorb the kinetic enegy of the hood.

In one embodiment, the energy-absorbing body is connected between the actuator and the hood.

In one embodiment, the energy-absorbing body comprises a bellows portion having one end fixed to the hood and the other end fixed to the actuator.

In one embodiment, the energy-absorbing body comprises a plate-shaped member having one end fixed to the hood and the other end fixed to the actuator.

In one embodiment, the actuator is fixed to the hood and the energy-absorbing body comprises a portion of the hood fixed to the actuator and an area including the periphery of the portion, the periphery having at least one concave portion formed in the periphery portion of the hood.

In one embodiment, the concave portion almost surrounds the portion of the hood fixed to the actuator.

In one embodiment, the at least one actuator comprises a body portion formed into a tubular shape and a rod disposed on said body portions so that the rod can be raised, wherein the actuator is arranged to raise the rod and flips up the hood when the sensor detects a collision between the front portion of the vehicle and an obstacle and wherein the energy-absorbing body is arranged to absorb the kinetic energy of the hood that is flipped up due to inertia after the rod has been completely raised, by plastic deformation of the energy-absorbing body.

In one embodiment, the at least one actuator comprises two actuators, a first actuator disposed below the rear end of the hood at one side of the hood, and a second actuator disposed below the rear end of the hood at the other side of the hood.

According to a further aspect of the invention, there is provided a method for flipping up a hood provided at a front portion of a vehicle, the method comprising detecting a collision between the front portion of the vehicle and an obstacle, flipping up the rear end of the hood with at least one actuator fixed to the vehicle body when a collision between the front portion of the vehicle and the obstacle is detected and absorbing kinetic energy of the hood that is flipped up by the actuators by plastic deformation of an energy-absorbing body.

In one embodiment, absorbing kinetic energy comprises expanding a bellows portion having one end fixed to the hood and the other end fixed to the actuator.

In one embodiment, absorbing kinetic energy comprises deforming a plate-shaped member having one end fixed to the hood and the other end fixed to the actuator.

In one embodiment, absorbing kinetic energy comprises deforming a portion of the hood in an area including the periphery of the portion of the actuator attached to the hood, the periphery having at least one concave portion formed in the periphery portion of the hood.

According to a still further aspect of the invention there is provided a vehicle equipped with a flip-up type hood at the front portion of the vehicle body, comprising a hood disposed so that the rear end can be flipped up from the vehicle body, actuator means fixed to said vehicle body for flipping up the rear end of the hood, sensor means for detecting a collision between the front portion of the vehicle and an obstacle, control means for driving the actuators when the sensor means detects a collision between the front portion of the vehicle and an obstacle and energy-absorbing means for absorbing the kinetic energy of the flip-up operation of the hood performed by the said actuators by means of plastic deformation.

According to yet another aspect of the invention there is provided an flip-up hood structure for a vehicle comprising a hood disposed at a front portion of the vehicle body and arranged so that the rear end can be flipped up from the vehicle body, actuator means for flipping up the rear end of the hood, sensor means for detecting a collision between the vehicle and an obstacle, control means for activating the actuators when the sensor means detects a collision between the the vehicle and an obstacle and energy-absorbing means for absorbing the kinetic energy of the hood.

In embodiments of the invention, the occurrence of up and down vibration of the flipped-up hood can be mitigated by absorbing the kinetic energy of the hood by means of plastic deformation of energy-absorbing bodies.

The various aspects, embodiments and alternatives set out in the preceding paragraphs, in the claims and in the following description may be implemented individually or in combination.

The present invention will now be described, by way of example only, with reference to the accompanying drawings in which:
Fig. 1 is a schematic diagram showing an automobile equipped with a flip-up type hood structure embodying a first form of the invention;
Figs. 2(a), 2(b), and 2(c) are explanatory diagrams for explaining the opened and closed state of the hood, in which Fig. 2(a) shows the closed state of the hood, Fig. 2(b) shows the opened state of the hood, and Fig. 2(c) shows the flipped-up state of the hood;
Fig. 3 is a side view of a longitudinal section of the periphery of the rear end of the hood;
Fig. 4 is a side view of a longitudinal section of the periphery of the rear end of the hood when it is in the flipped-up state;
Figs. 5(a) and 5(b) are explanatory diagrams for explaining a collision between an obstacle and the hood, in which Fig. 5(a) shows the expanded state of the actuators and the energy-absorbing bodies and Fig. 5(b) shows the contracted state of the actuators and the energy-absorbing bodies;
Fig. 6 is a side view of a longitudinal section of the periphery of the rear end of a hood embodying a second form of the invention invention;
Fig. 7 is a side view of a longitudinal section of the periphery of the rear end of the hood when it is in the flipped-up state;
Fig. 8 is a side view of a longitudinal section of the periphery of the rear end of a hood embodying a second form of the invention; and
Fig. 9 is a side view of a longitudinal section of the periphery of the rear end of the hood when it is in the flipped-up state.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention.

Embodiments of the present invention provide a flip-up type hood structure and hood flip-up method that can mitigate the occurrence of up and down vibration of the flipped-up hood without complicating the constitution of the actuators.

An important characteristic of the present invention is the absorption of the kinetic energy of the hood by means of plastic deformation of the energy-absorbing bodies.

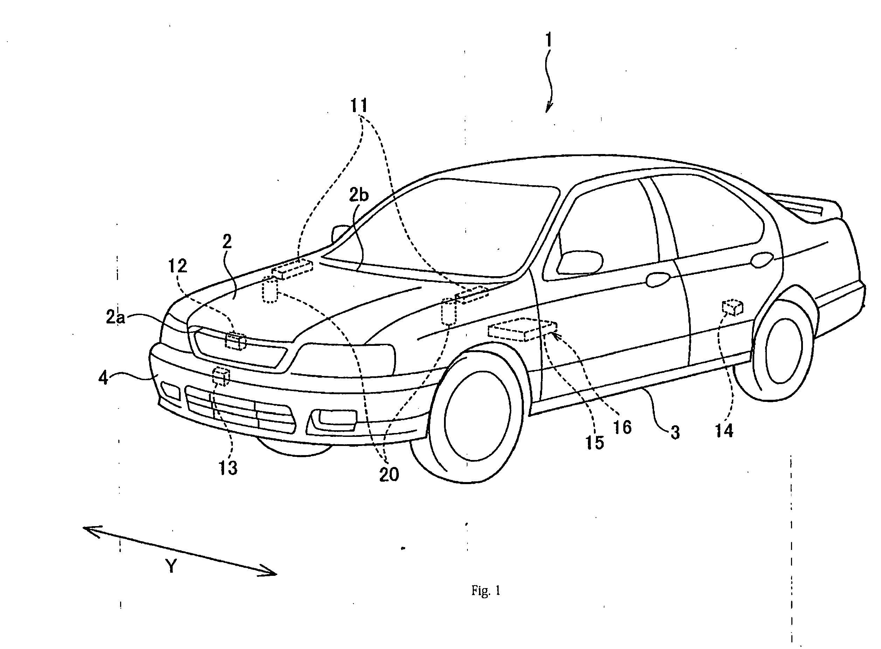

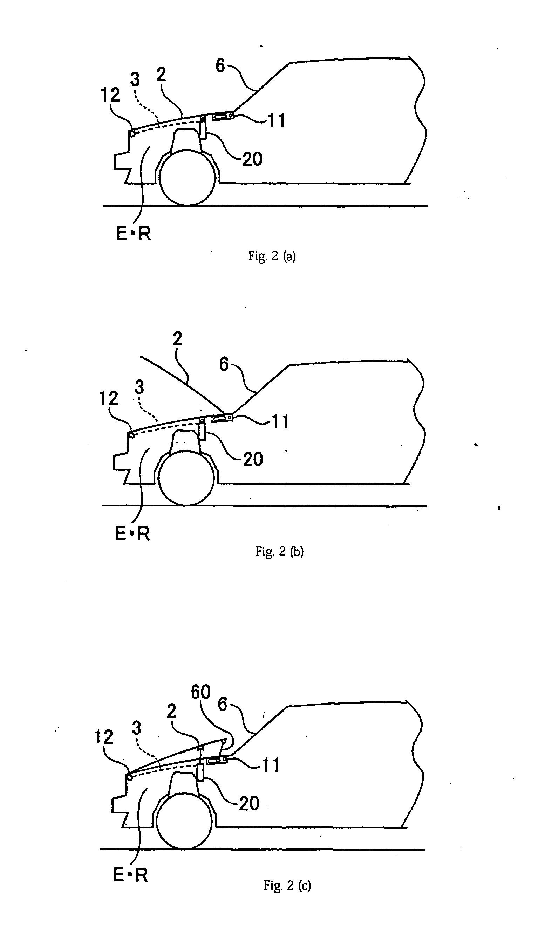

An explanation is provided of Embodiment 1 of the present invention based on Fig. 1 or Fig. 2. Fig. 1 is a schematic diagram showing the constitution of a vehicle equipped with the flip-up type hood structure for the present embodiment. Fig. 2 is an explanatory diagram for explaining the opened and closed state of the hood. Fig. 2 (a) shows the closed state of the hood, (b) shows the opened state of the hood and (c) shows the flipped-up state of the hood.

As shown in Fig. 1, the vehicle, or automobile 1, is equipped with hood 2 at its front portion. Hood 2 is provided on vehicle body 3 via hinge mechanisms 11, which are disposed on both ends of rear end portion 2b in the "Y" direction of the vehicle so that it can open or close easily and so that it covers the top of engine room ER. Hood 2 is locked in the closed state to vehicle body 3 by means of hood lock mechanism 12, which is disposed on the front portion of automobile 1. Automobile 1 is equipped with various types of components that flip up hood 2 when a collision between the front end of the vehicle and an obstacle is detected in order to control the reactive force to the obstacle. Reference symbol 6 in Fig. 2 is the windshield.

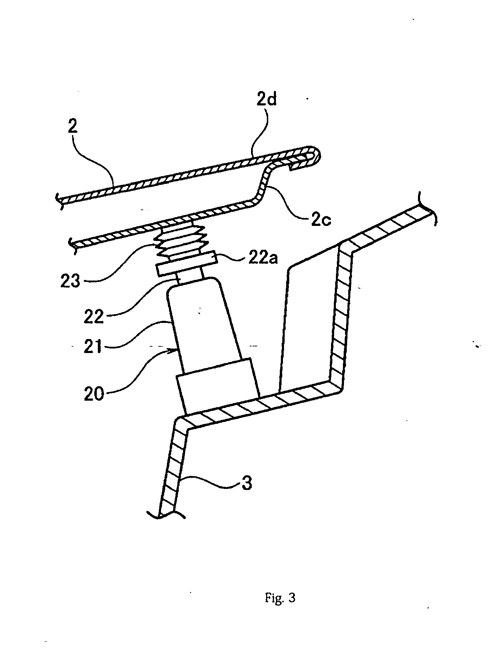

As components pertaining to the flipping up of hood 2, automobile 1 is equipped with actuators 20, energy-absorbing bodies 23 (see Fig. 3), which are separate parts but connected to actuators 20, bumper sensor 13, speed sensor 14 and controller 15.

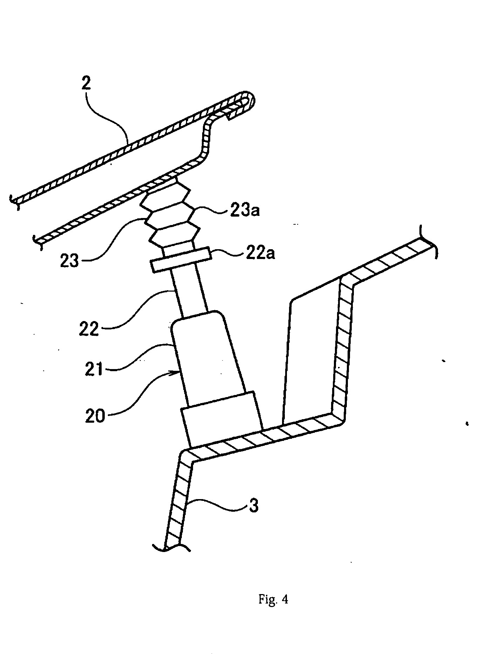

Fig. 3 is a side view of a longitudinal section showing the periphery of rear end portion 2b of hood 2. Fig. 4 is a side view of a longitudinal section showing the periphery of rear end portion 2b of hood 2 when hood 2 is in the flipped-up state.

As shown in Fig. 1 or Fig. 3, actuators 20 are disposed on vehicle body 3 in the vicinity of hinge mechanisms 11 at both ends in the direction indicated by "Y" of rear end portion 2b of hood 2. As shown in Fig. 3 and Fig. 4, these actuators 20 are provided with body portions 21 whose lower ends are fixed to vehicle body 3 and thrust rods 22 that are disposed on body portions 21 so that they can be raised. On top of thrust rods 22 are formed disk-shaped support portions 22a, and to these support portions 22a are fixed the bottom of energy-absorbing bodies 23. For actuators 20, all of thrust rods 22 except the top ends are normally stored in body portions 21.

Actuators 20 push up rear end portion 2b of hood 2 via energy-absorbing bodies 23 by raising thrust rods 22 from body portions 21 with one push and hold rear end portion 2b of hood 2 in the flipped-up position from vehicle body 3.

Energy-absorbing bodies 23 are formed into disk shapes and on their side portions are formed bellows-shaped bellows portions 23a so that they can expand and contract upward and downward. As explained above, the bottom of energy-absorbing bodies 23 are fixed to support portions 22a of actuators 20 and the tops are fixed to the bottom of hood 2. At this point, hood 2 is structured so that inner panel 2c, which is a plate-shaped member formed on the bottom of hood 2, and outer panel 2d, which is a plate-shaped member formed on the top of hood 2, are connected so that they overlap with one another, and to the bottom of inner panel 2c are fixed the bottoms of energy-absorbing bodies 23.

Bumper sensor 13 is disposed on front bumper 4 and detects a collision between the front end of the vehicle and an obstacle, and speed sensor 14 detects the speed of the vehicle. And then, controller 15 outputs the signals to actuators 20 based on the detection signals input from bumper sensor 13 and speed sensor 14 and drives actuators 20. Control means 16 comprises bumper sensor 13, speed sensor 14 and controller 15.

Next is provided an explanation of the hood flip-up operation for automobile 1. When the speed of the vehicle is more than the regulated speed and bumper sensor 13 detects a collision between the front end of automobile 1 and an obstacle and inputs the detection signal to controller 15, controller 15 drives actuators 20 and actuators 20 flip up hood 2 (Fig. 2 (c)). When this takes place, lift member 60 rises up at hinge mechanisms 11 in accordance with the operation of actuators 20 and together with actuators 20 holds rear end portion 2b of hood 2 in the flipped-up position.

Next is provided an explanation of the operation of energy-absorbing bodies 23 that takes place when the operation explained above occurs. Actuators 20, which have been driven by controller 15, raise thrust rods 22 from body portions 21 with one push, and when thrust rods 22 are completely raised up, the bottoms of energy-absorbing bodies 23 are positioned by actuators 20, while the top portions are pulled upward by hood 2, which flips up due to inertia. In this manner, at energy-absorbing bodies 23, bellows portions 23a undergo plastic deformation by changing from a contracted state (Fig. 3) to an expanded state (Fig. 4). Due to this plastic deformation, energy-absorbing bodies 23 absorb the kinetic energy of hood 2 that has flipped up due to inertia and stop hood 2 at the flip-up target position. Hood 2 is gently stopped due to the absorption of the kinetic energy of hood 2 that is performed by energy-absorbing bodies 23 at this point, and the occurrence of the vibration of hood 2 can be mitigated. In this manner, by absorbing the kinetic energy of hood 2 due to plastic deformation of energy-absorbing bodies 23, the occurrence of up and down vibration of flipped-up hood 2 can be mitigated without complicating the constitution of actuators 20.

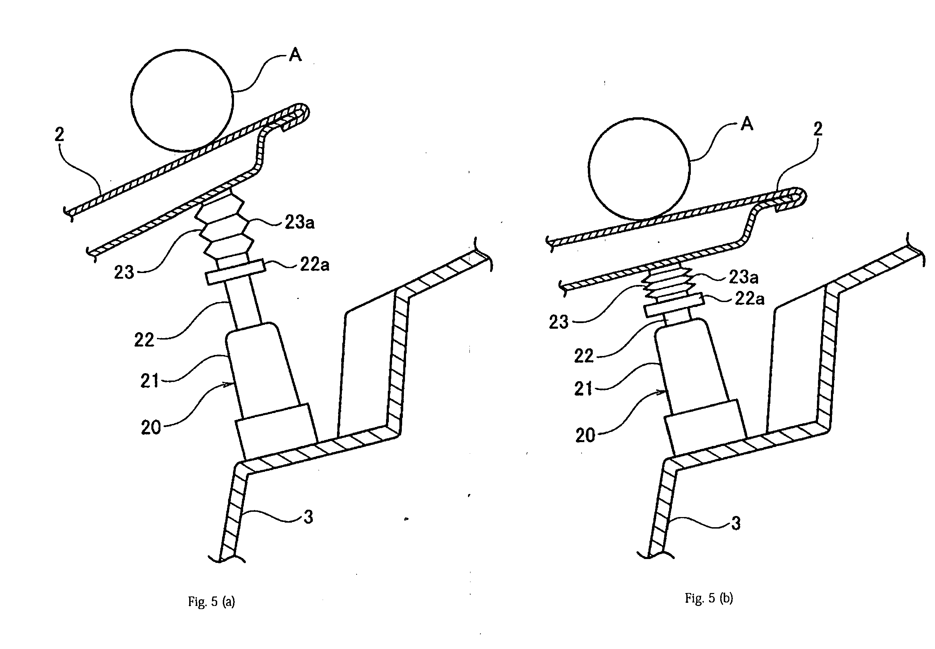

Next is provided an explanation of when the obstacle falls down on top of hood 2 after hood 2 is flipped up, causing a secondary collision with the upper portions of actuators 20 of hood 2, with reference to Fig. 5. Fig. 5 is an explanatory diagram for explaining the collision between the obstacle and hood 2. In Fig. 5, (a) shows the expanded state of actuators 20 and energy-absorbing bodies 23 and (b) shows the contracted state of actuators 20 and energy-absorbing bodies 23.

In this case, as shown in Fig. 5 (a), when obstacle A crashes with the upper portions of actuators 20 of hood 2, a load is applied in the downward direction on hood 2 as well as energy-absorbing bodies 23 and actuators 20. Energy-absorbing bodies 23 are compressed due to this load, bellows portions 23a are plastic deformed into the contracted state (Fig. 5 (b)) and the impact energy from obstacle A is absorbed. In this manner, the reactive force to obstacle A, which causes a secondary crash with hood 2, is mitigated. Thus, by absorbing the impact energy from obstacle A by means of energy-absorbing bodies 23, the energy absorption properties in relation to the load input from the upward direction of hood 2 after it is flipped up can be satisfied without making actuators 20 more complicated. In addition, the impact energy from obstacle A is absorbed at actuators 20 by forcing thrust rods 22 into body portions 21, further mitigating the reactive force to obstacle A, which causes the secondary collision with hood 2.

In addition, for the present embodiment, the amount in which hood 2 is flipped up is determined by the total sum of the amount in which actuators 20 are pushed up (the amount that they are flipped up) and the amount in which energy-absorbing bodies 23 are expanded, so compared to a constitution in which energy-absorbing bodies 23 are not provided, the amount in which actuators 20 are pushed up can be less by the amount of expansion of energy-absorbing bodies 23. Therefore, actuators 20 can be more compact and less expensive to manufacture.

In addition, for the present embodiment, energy-absorbing bodies 23 are connected to actuators 20 and hood 2, so there is no need to provide a separate member to connect actuators 20 to hood 2 other than energy-absorbing bodies 23, resulting in fewer parts for the hood flip-up structure and a lower cost.

Furthermore, for the present embodiment, since energy-absorbing bodies 23 absorb the energy by contracting and expanding bellows-shaped bellows portions 23a, a stable reactive force can be generated for the period from when contraction and expansion of bellows portions 23a begins until it ends, making it easy to adjust the amount of energy absorbed by energy-absorbing bodies 23 depending upon the design.

### [Embodiment 2]

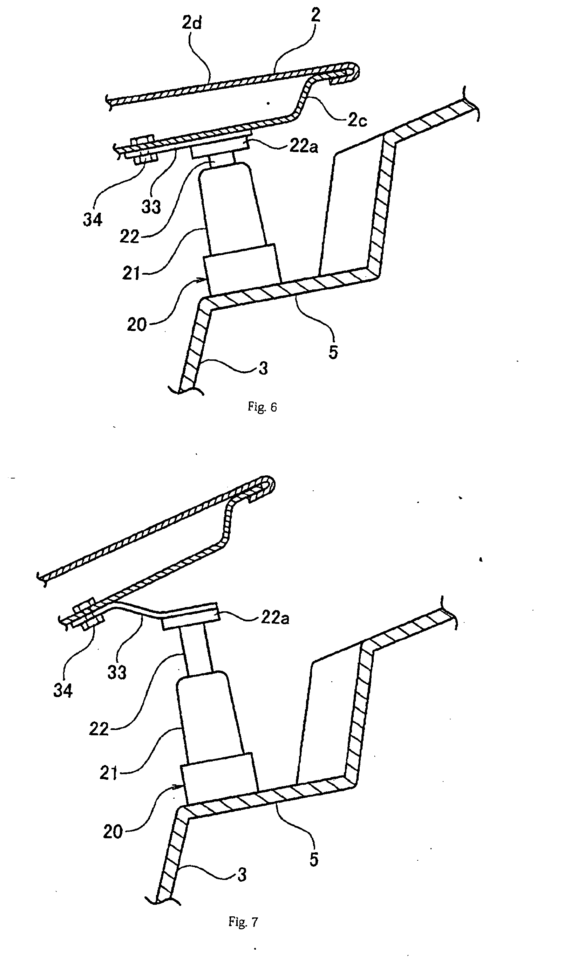

Next is provided an explanation of Embodiment 2 of the present invention based on Fig. 6 and Fig. 7. Explanation of parts that have the same reference symbols that have already been explained in the aforementioned embodiment has been omitted. (The same is true for all embodiments hereafter.) Fig. 6 is a side view of a longitudinal section showing the periphery of rear end portion 2b of hood 2 for the present embodiment. Fig. 7 is side view of a longitudinal section showing the periphery of rear end portion 2b of hood 2 when hood 2 is in the flipped-up state.

As shown in Fig. 6, for this embodiment, energy-absorbing bodies 33 are different than those in Embodiment 1. Energy-absorbing bodies 33 for the present embodiment are flat metal plate-shaped members. The tops of these energy-absorbing bodies 33 are fixed to hood 2 by screws 34, while the bottoms are fixed to actuators 20.

For this type of constitution, when the flip-up operation of hood 2 takes place, actuators 20 push up thrust rods 22 from body portions 21 with one push, as was the case in Embodiment 1. After thrust rods 22 have been completely raised, the bottoms of energy-absorbing bodies 33 are positioned by actuators 20, while the top portions are pulled upward by hood 2, which flips up due to inertia. In this manner, energy-absorbing bodies 33 undergo plastic deformation by changing from a differing-level state to a bent state (Fig. 7). Due to this plastic deformation, energy-absorbing bodies 33 absorb the kinetic energy of hood 2 that has flipped up due to inertia and stop hood 2 at the flip-up target position. Hood 2 is gently stopped due to the absorption of the kinetic energy of hood 2 that is performed by energy-absorbing bodies 33 at this point, and the occurrence of the vibration of hood 2 can be mitigated. In this manner, for the present embodiment, by absorbing the kinetic energy of hood 2 due to plastic deformation of energy-absorbing bodies 33, the occurrence of up and down vibration of flipped-up hood 2 can be mitigated without complicating the constitution of actuators 20, as was the case for Embodiment 1.

In addition, when obstacle A falls down on top of hood 2 after hood 2 is flipped up causing a secondary crash with the upper portion of actuators 20 of hood 2, a load is applied in the downward direction to hood 2 as well as energy-absorbing bodies 33 and actuators 20, as was the case in Embodiment 1. Due to this load, energy-absorbing bodies 33 plastic deform into a flat shape and absorb the impact energy from obstacle A. Thus, the reactive force to obstacle A, which causes the secondary crash with hood 2, is mitigated. For the present embodiment, the energy-absorbing properties in relation to the load input from the upper portion of hood 2 after it has been flipped up can be satisfied by using energy absorbing bodies 33 to absorb the impact energy from obstacle A without making actuators 20 more complicated, as was the case for Embodiment 1.

In addition, for the present embodiment, since energy-absorbing bodies 33 are plate-shaped members, they can be manufactured more inexpensively, which means that the increased cost of a flip-up type hood structure equipped with energy-absorbing bodies 33 can be curtailed.

### [Embodiment 3]

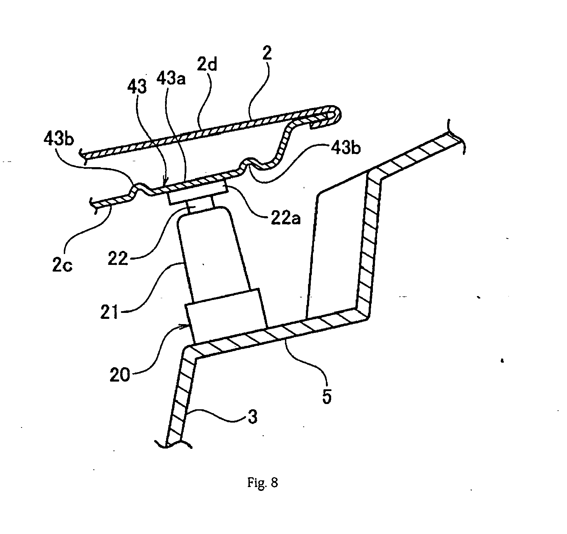

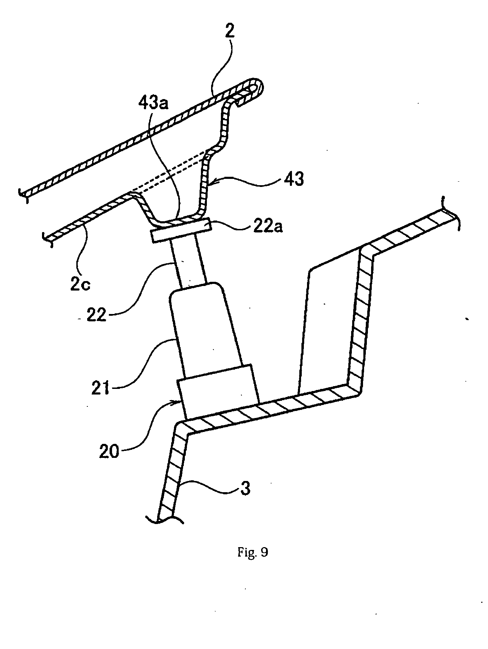

Next is provided an explanation of Embodiment 3 of the present invention based on Fig. 8 and Fig. 9. Fig. 8 is a side view of a longitudinal section showing the periphery of rear end portion 2b of hood 2 for the present embodiment and Fig. 9 is a side view of a longitudinal section showing the periphery of rear end portion 2b of hood 2 when it is in the flipped-up state.

As shown in Fig. 8, for this embodiment, energy-absorbing bodies 43 are different than those in Embodiment 1. Energy-absorbing bodies 43 for the present embodiment comprise a portion of hood 2.

More specifically, for the present embodiment, first, the tops of actuators 20 are directly fixed to hood 2 and energy-absorbing bodies 43 are comprised of portions 43a that are fixed to actuators 20 of hood 2 (hereafter referred to as actuator-fixed portions) and the area including the periphery of said portions. On energy-absorbing bodies 43 are formed concave portions 43b that almost surround actuator-fixed portions 43a and that have an opening in the downward direction. Concave portions 43b are formed so as to indent inner panel 2c of hood 2 in the upward direction. Concave portions 43b can also be concave portions with openings in the upward direction formed so as to indent inner panel 2c in the downward direction.

For this type of constitution, when the flip-up operation of hood 2 takes place, actuators 20 push up thrust rods 22 from body portions 21 with one push, as was the case in Embodiment 1. After thrust rods 22 have been completely raised, energy-absorbing bodies 43, which comprise hood 2, are pulled upward by hood 2, which flips up due to inertia, while actuator-fixed portions 43a are positioned by actuators 20. In this manner, energy-absorbing bodies 43 deform from starting points concave portions 43b and plastic deform into a protrusion shape in the downward direction (see Fig. 9). Due to this plastic deformation, energy-absorbing bodies 43 absorb the kinetic energy of hood 2 that has flipped up due to inertia and stop hood 2 at the flip-up target position. Hood 2 is gently stopped due to the absorption of the kinetic energy of hood 2 that is performed by energy-absorbing bodies 43 at this point, and the occurrence of the vibration of hood 2 can be mitigated. In this manner, for the present embodiment, by absorbing the kinetic energy of hood 2 due to plastic deformation of energy-absorbing bodies 43, the occurrence of up and down vibration of flipped-up hood 2 can be mitigated without complicating the constitution of actuators 20, as was the case for Embodiment 1.

In addition, when obstacle A falls down on top of hood 2 after hood 2 is flipped up causing a secondary crash with the upper portions of actuators 20 of hood 2, a load is applied in the downward direction to hood 2 as well as energy-absorbing bodies 43 and actuators 20, as was the case in Embodiment 1. Due to this load, energy-absorbing bodies 43 plastic deform as the protrusion shape is crushed and absorb the impact energy from obstacle A. Thus, the reactive force to obstacle A, which causes the secondary crash with hood 2, is mitigated. For the present embodiment, the energy-absorbing properties in relation to the load input from the upper portion of hood 2 after it has been flipped up can be satisfied by using energy absorbing bodies 43 to absorb the impact energy from obstacle A without making actuators 20 more complicated, as was the case for Embodiment 1.

In addition, for the present embodiment, since energy-absorbing bodies 43 are combined to form a single unit with hood 2, the increased cost of a flip-up type hood structure that is due to providing energy-absorbing bodies 43 can be curtailed.

In addition, for the present embodiment, since actuators 20 are directly fixed to hood 2, there is no need to provide additional members for connecting actuators 20 to hood 2. Therefore, fewer parts are needed for a flip-up type hood structure and costs can be reduced.

The present invention is not restricted to the embodiments explained above and various other types of embodiments may be used as long as their scope does not deviate from the contents of the present invention. For example, energy-absorbing body is connected between the actuator and the body of the vehicle.

This application claims priority from Japanese Application No. 2005-117292, filed on 14th April 2005, the contents of which are incorporated herein by reference.

## Claims

1. A vehicle comprising:
a hood disposed at a front portion of the vehicle body and arranged so that the rear end can be flipped up from the vehicle body;
actuator means for flipping up the rear end of the hood;
sensor means for detecting a collision between the vehicle and an obstacle;
control means for activating the actuators when the sensor means detects a collision between the the vehicle and an obstacle; and
energy-absorbing means for absorbing the kinetic energy of the hood.

2. A vehicle as claimed in claim 1 wherein the energy-absorbing means is arranged to absorb the kinetic energy of the hood by me by means of plastic deformation.

3. A vehicle as claimed in claim 1 or claim 2, wherein the energy-absorbing means is disposed between the actuator means and the hood.

4. A vehicle as claimed in any preceding claim, wherein the energy-absorbing means comprises a bellows portion having one end connected to the hood and the other end connected to the actuator means.

5. A vehicle as claimed in any of claims 1 to 3 wherein the energy-absorbing means comprises a plate-shaped member having one end fixed to the hood and the other end fixed to the actuator.

6. A vehicle as claimed in any of claims 1 to 3 wherein the actuator means is connected to the hood and wherein the energy-absorbing means comprises a deformable portion of the hood.

7. A vehicle as claimed in claim 6 wherein the deformable portion of the hood is at least partly surrounded by an indented or concave region.

8. A vehicle as claimed in any preceding claim wherein the actuator means comprises:
a body portion formed into a tubular shape; and
a rod disposed on said body portions so that the rod can be raised;
wherein the actuator means is arranged to raise the rod thereby to flip up the hood when the sensor means detects a collision between the front portion of the vehicle and an obstacle; and
wherein the energy-absorbing means is arranged to absorb the kinetic energy of the hood due to inertia after the rod has been raised by plastic deformation of the energy-absorbing means.

9. A vehicle as claimed in any preceding claim, wherein the actuator means comprises two actuators, a first actuator disposed below the rear end of the hood at one side of the hood, and a second actuator disposed below the rear end of the hood at the other side of the hood.

10. A method for flipping up a hood provided at a front portion of a vehicle, the method comprising:
detecting a collision between the vehicle and an obstacle;
flipping up the rear end of the hood with at least one actuator connected to the vehicle body when a collision between the vehicle and the obstacle is detected; and
absorbing kinetic energy of the hood by plastic deformation of an energy-absorbing body.

11. A method as claimed in claim 10, wherein absorbing kinetic energy comprises at least one of:
expanding a bellows portion having one end fixed to the hood and the other end fixed to the actuator;
deforming a plate-shaped member having one end fixed to the hood and the other end fixed to the actuator; and
deforming a portion of the hood.
